# EUROPEAN PATENT APPLICATION

(11) **EP 0 967 143 A2**
(43) Date of publication of application: **29.12.1999**
(21) Application number: 99111765.6
(22) Date of filing: 18.06.1999
(51) Int. Cl.: B62K 25/08

(54) **Anti-lift device for a motorcycle front fork**

(30) Priority: 23.06.1998 IT MI981436
(71) Applicant: Cagiva Motor S.p.A., 21100 Varese (IT)
(72) Inventor: Maddii, Corrado, 52023 Levane (Arezzo) (IT)
(74) Representative: Ripamonti, Enrico, Dr. Ing.

(57) **Abstract**

An anti-lift device (9) for the front fork of a motorcycle, the motorcycle comprising at least one damper member (1) connected to the front wheel and having a sleeve (2) and a rod (3) which move telescopically relative to each other. The device (9) comprises means (8, 10; 50) for blocking relative movement between said sleeve (2) and said rod (3) when the damper member (1) is in a compressed position attained before the vehicle moves, said means releasing said sleeve (2) and rod (3) for movement after the motorcycle begins to move, and enabling the damper member (1) to undergo free movement for the entire period during which the motorcycle is in use.

## Description

This invention relates to an anti-lift device in accordance with the introduction to the main claim.

A fork is known to comprise at least one damper member having a sleeve and a rod which move telescopically relative to each other. These latter can be positioned in two different ways relative to the front wheel, in that they can either have their sleeve associated with the wheel and their rod associated with the handlebar, or vice versa. In this manner two damper members are defined, and by extension two forks, namely inverted and traditional. Hence each damper member has a telescopic structure operating between two working extremes corresponding to minimum length and maximum length, its free length being predetermined.

With known forks, when the vehicle begins to move there is relative movement between the sleeve and rod, usually such that the damper member reaches its maximum length at the end of this movement. This causes the vehicle barycentre to shift towards the rear wheel and, under the worst conditions in which the engine is required to deliver maximum power (such as when racing on a racetrack or off the road), the motorcycle can rear up. This also results in dispersion of the power generated by the engine, which is partly dissipated by the movement of the forks (even though the motorcycle is at rest).

In addition, the elongation of the damper member can result in loss of balance by the driver, with certain loss of vehicle directionability and control.

An object of the invention is to provide a device which prevents sudden elongation of the damper member and hence of the fork on a motorcycle during its start.

A particular object of the invention is to provide a device of the stated type which is of simple construction, can be easily engaged by the driver (ie can be easily activated when required) and be likewise easily and reliably disengaged after the vehicle has started (or undergone its initial movement).

A further object is to provide a device of the stated type which provides the driver with maximum available power from the engine for transfer to the ground, hence preventing this power being dissipated in the form of elongation movements of the fork.

These and further objects which will be apparent to the expert of the art are attained by a device in accordance with the accompanying claims.

The invention will be more apparent from the accompanying drawing, which is provided by way of example and on which:
Figure 1 is a perspective view of a device of the invention applied to a damper member;
Figure 2 is a side view of the damper member of Figure 1 provided with the device of the invention;
Figures 3 and 4 are respectively a front view and a side view of the device of Figure 1;
Figure 5 is a section through a damper member provided with a different device of the invention, shown in its working position in which the elements of said member can move normally and freely; and
Figure 6 is a view similar to that of Figure 5, but with the device blocking any movement of the elements of the damper member.

With reference to said figures, a damper member is indicated overall by 1 and comprises a sleeve 2 associated with the motorcycle frame (not shown), and a rod 3 which can move relative to said sleeve and is associated with the vehicle front wheel (not shown) in known manner.

At a free end 5, the sleeve 2 carries a split ring member 6 which can be clamped onto the sleeve by usual screws cooperating with projections 7. The ring member 6 carries a hook-shaped element 8 arranged to cooperate with a device 9 for locking the damper member in a compressed position.

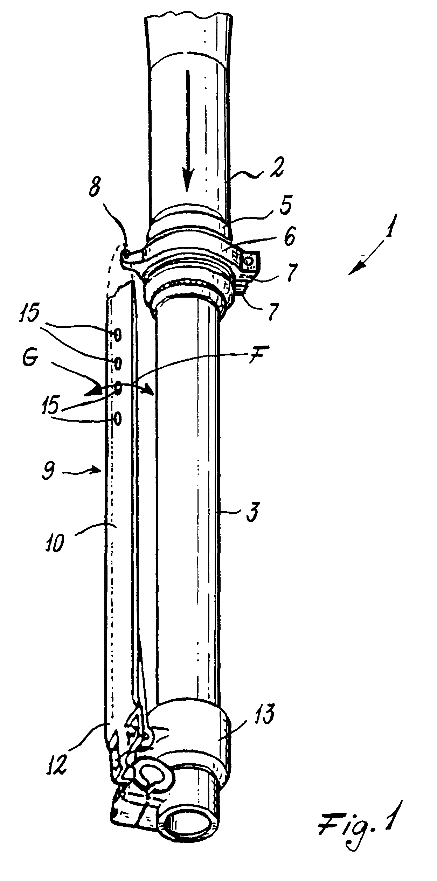

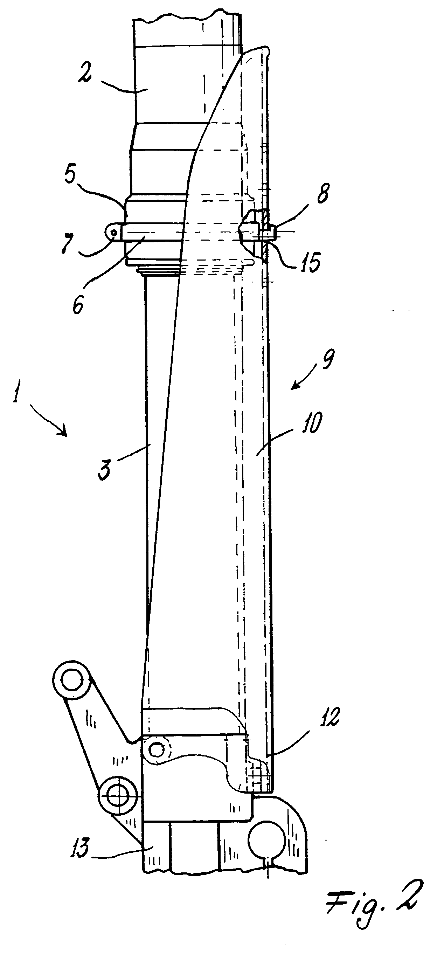

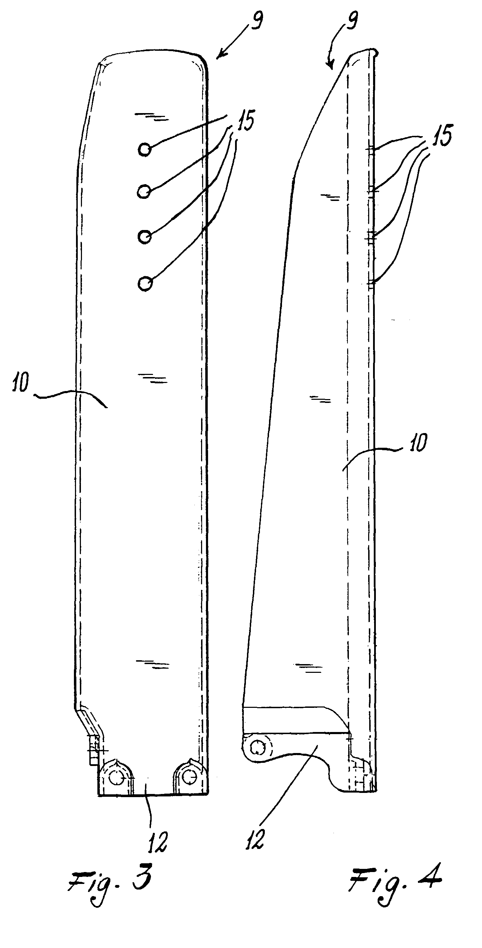

More specifically, with reference to Figures 1 to 4, said device 9 is a member 10 positioned to the front of the rod 3 and acting substantially as a rod guard. This guard is of arched shape and has an end 12 to be fixed onto the rod at its extremity 13, ie to the foot of the fork. The rod guard 10 has a plurality of through holes 15, any of which can be made to cooperate with the hook-shaped element 8 of the ring member 6 fixed on the sleeve 2 so that on starting the motorcycle the member 1 is maintained in a compressed position or in one of a plurality of such positions as allowed by the plurality of holes 15 provided at different heights in the rod guard 10.

In this respect, it will be assumed that the device of the invention is to be operated on the motorcycle. Before starting the motorcycle, for example during a competition, the member 1 is compressed (but not totally) by the driver in any known manner. While maintaining pressure on the member 1, the rod guard 10 is coupled to the ring member 6 by inserting the element or hook 8 into a hole 15 in the rod guard. If pressure on the member 1 is now released, it will remain in the compressed position because of the cooperation between the hook 8 and said hole 15.

Preferably and advantageously, to enable the hook 8 to enter the hole 15 (which is of larger dimensions than the hook), the rod guard 10 can be twisted (arrow F of Figure 1).

On starting the motorcycle, the compressed position of the member 1 enables the engine power to be totally used for moving the motorcycle. In this respect, because of the shape of the member 1 and the fact of it being maintained in this position, during starting the front end of the motorcycle cannot rise from the ground, the vehicle barycentre being shifted towards the front end of the vehicle. This enables the inertia on the rear wheel to be reduced, with reduction in the duration of contact between the front wheel and the ground, resulting in immediate forward movement of the starting motorcycle.

After movement has commenced, when the damper member is further compressed for example by impact with the ground after a jump (in the case of endurance racing) or after braking, the rod guard 10 unhooks automatically from the hook 8 to release the sleeve 2 of the rod 3 and allow the damper 1 to operate normally. This is due to the dimensions of the hole 15 and to the elasticity of the rod guard, which tends to return from its twisted position to its rest position (arrow G of Figure 1).

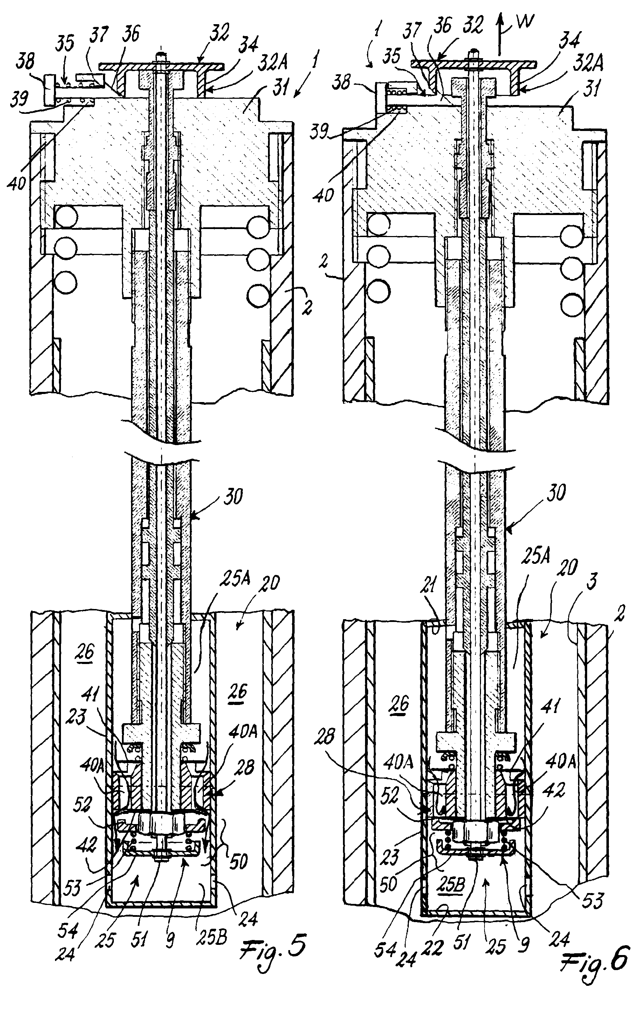

Figures 5 and 6 show a different device 9 applied to the "hydraulic circuit" of the damper 1.

In known manner, this latter comprises a cylindrical element 20 within the rod 3 and immersed in the lubricant liquid present therein, said cylindrical element having an upper wall 21 and a lower wall 22 which are connected together by a lateral wall 23. In this latter there are provided apertures 24 connecting the inner space 25 of the element 20 to the inner space 26 of the rod 3. The inner space 25 of the element 20 is divided into two chambers 25A and 25B by a member 28 associated with a shaft 30 which penetrates into the head 31 of the fork and emerges above it where it is connected to a disc 32. This disc has a portion 32A of cup shape with a skirt 34 lowerly cooperating with a pawl 35 provided with a wedge-shaped end 36 having a step 37, and a T-shaped second end 38 with which there cooperates a spring 39 inserted in a seat 40 in the head 31. The step 37 is arranged to cooperate with the skirt 34.

The member 28 comprises in known manner a plurality of through holes 40A to be closed by blade members 41 and 42. Specifically, the blade member 41 opens the holes 40A towards the chamber 25A (to hence allow the lubricant to pass from the chamber 25B to the chamber 25A) when the damper 1 is being compressed (as shown in Figure 5), whereas the blade member 42 opens the holes 40A towards the chamber 25B (to connect it to the chamber 25A) when the damper 1 is extending.

According to the invention, with the member 28 there is associated a closure element 50 for the holes 40A which cooperates with the blade member 42 to prevent lubricant passing from the chamber 25B to the chamber 25A and hence prevent the damper (and the fork) extending. This element, defining the device 9 of the invention, is associated with the free end 51 of the shaft 30 and comprises a ring member 52 arranged to cooperate with the blade member 41. A compression spring 53 is interposed between the ring member 52 and a cup element 54 fixed to the end 51 of the shaft 30.

During the use of the device of the invention, the driver loads the damper 1 by compressing it as previously described in relation to the embodiment of Figures 1 to 4. The fluid in the chamber 25A passes through the holes 40A and penetrates, in known manner, into the chamber 25B by overcoming the closure force of the blade member 42. Having done this, the driver raises (arrow W of Figure 6) the shaft 30 by moving it against the spring 53, and presses the pawl 35 against the spring 39 so as to bring its wedge-shaped end 36 below the cup 32A and engage the skirt 34 of this latter with the step 37. As a consequence of this, the element 50 approaches the blade member 42 and presses it against the member 28. Specifically, the ring member 52 is brought into contact with the blade member 42 and prevents its movement.

The damper hence remains loaded. After starting, the driver raises the disc 32 (arrow W) to enable the pawl 35 to return with its end 36 to the outside of the cut portion 34, urged by the spring 39. At this point the spring 53 pulls the disc 32 towards the head 31 and hence the shaft 30 moves within the rod 3 to withdraw the member 52 from the blade member 41 and allow the damper to operate normally.

Two embodiments of the invention have been described. Others are possible in the light of the aforegoing description. For example the pawl 35 of Figures 5 and 6 can be released automatically following the next further compression movement of the damper 1, such movement occurring for example when the fork undergoes its first impact after starting. The pawl 35 can also be released as the result of a hydraulic thrust exerted on the member 28 following the first impact after starting, which by compressing the spring 53 lifts the disc 32 and the cup 34, to release the pawl 35.

## Claims

1. An anti-lift device (9) for the front fork of a motorcycle, the motorcycle comprising at least one damper member (1) connected to the front wheel and having a sleeve (2) and a rod (3) which move telescopically relative to each other, said device (9) being characterised by comprising means (8, 10; 50) for blocking relative movement between said sleeve (2) and said rod (3) when the damper member (1) is in a compressed position attained before the vehicle moves, said means releasing said sleeve (2) and rod (3) for movement after the motorcycle begins to move, and enabling the damper member (1) to undergo free movement for the entire period during which the motorcycle is in use.

2. A device as} claimed in claim 1, characterised in that the blocking means are mechanical members (8, 10).

3. A device as claimed in claim 2, characterised in that the blocking means are a member (10) associated with one component chosen from said sleeve (2) and said rod (3) and positioned parallel to this latter, said member (10) comprising at least one hole (15) arranged to cooperate with a hook-shaped element (8) associated with the other component chosen from said sleeve (2) and said rod (3).

4. A device as claimed in claim 3, characterised in that the member (10) associated with one component chosen from said sleeve (2) and said rod (3) comprises a plurality of holes positioned at different heights in said member (10).

5. A device as claimed in claim 3, characterised in that the hole (15) is of larger dimensions than the hook-shaped element.

6. A device as claimed in claim 1, characterised in that the blocking means (50) are in the interior of either said sleeve (2) or said rod (3).

7. A device as claimed in claim 6, characterised in that the blocking means (50) act on the circulation of fluid present within the damper member (1) to block it when this latter is in a compressed position.

8. A device as claimed in claim 7, characterised in that the blocking means (50) comprise a pressing member (52) arranged to cooperate with a blade member (42) for closing holes (40A) in a member (28) which is positioned within a cylindrical element (20) located inside the rod and which separates a chamber (25) of this latter into two portions (25A, 25B) mutually communicating via said holes, one of said chambers (25B) communicating with the inner space (26) of the rod (3) and containing lubricant fluid, said pressing member (52) being supported by a shaft (30) emerging upperly from the damper member (1) and cooperating with a disengagable locking element (35) which enables said pressing member to be maintained pressing or not pressing on the blade member (42), and hence to lock or not lock the damper member in a compressed position.

9. A device as claimed in claim 8, characterised in that the pressing member (52) cooperates with a spring (53) interposed between said member and an end cup member (54) associated with the shaft (30).

10. A device as claimed in claim 8, characterised in that the disengagable locking element (35) has an extremity (36) arranged to cooperate with the underside of an end member (32) associated with the shaft (30) and positioned on top of the damper member (1), said locking element (35) being arranged to maintain said end member spaced from said damper member (1) so as to maintain the pressing member in contact with the blade member (42), said locking element (35) cooperating with elastic return means (39) arranged to distance it from the end member (32) of the shaft (30).
